# EUROPEAN PATENT APPLICATION

(11) **EP 1 862 980 A2**
(43) Date of publication of application: **05.12.2007**
(21) Application number: 07007287.1
(22) Date of filing: 07.04.2007
(51) Int. Cl.: G08B 13/22, G08B 25/10

(54) **System and method for automobile protection through residential security system**

(30) Priority: 01.06.2006 US 421604
(71) Applicant: Robert Bosch GmbH, 70442 Stuttgart (DE)
(72) Inventor: Kogan, Eugene, Rochester, NY 14618 (US); Markham, Steven A., Rochester, NY 14607 (US); Nagarajan, Dhanasekaran, Rochester, NY 14618 (US)
(74) Representative: Dreiss, Fuhlendorf, Steimle & Becker

(57) **Abstract**

The present invention is directed to a method and system for providing a residential security system that is also capable of protecting a remote mobile object. The remote mobile object may be a vehicle such as an automobile. The residential security system may include at least one central sensing component for sensing activities within a central environment and central security system controls such as protective state components for determining a protective state of the security system and protective zone controls for defining a protected zone of the security system. The protective zone is extendable beyond the central environment. The system may additionally include at least one selectively recognized remote sensing component located within an automobile remote from the central environment, wherein the selective recognition is dependent upon the protective state and the protective zone controls.

## Description

### TECHNICAL FIELD

Embodiments of the present invention relate to security systems. More particularly, embodiments of the invention are directed to protecting a remote mobile object, such as an automobile, in the vicinity of a residence using a residential security system.

### BACKGROUND OF THE INVENTION

Currently, in the field of security systems, residential security systems are available for protecting a residence from intruders. Typically, when an intruder is detected, the residential security system activates an alarm and/or notifies the homeowner or other entity, such as a monitoring service, of the intrusion through an alternative technique.

Typically, while alarms are also available for automobile protection, these alarms are separate and distinct from residential security systems. While automobiles may be protected from theft when parked inside of a garage connected with a residence, the automobiles typically are not protected by the residential security system when they are parked on the street or in otherwise in the vicinity of the residence.

Some prior systems have attempted to integrate residential security systems with automobile protection. For instance, U.S. Patent Application No. 2005/0128068 discloses a home security system having a vehicle interface and remote vehicle monitor. A vehicle control system includes a transceiver for receiving commands from the home security system for performing actions such as arming and disarming the alarm system, unlocking or locking the doors, opening or closing windows, and starting or stopping the engine.

U.S. Patent Application Publication No. 2005/0046751 discloses an integrated security system that monitors a tag located in a vehicle. If theft of the automobile is attempted, the tag can trigger the security system of the vehicle. The tag may include a radio frequency transceiver communicating with a master control unit located inside the home.

U.S. Patent Application Publication No. 2005/0062602 discloses a security system with an in-vehicle mounted terminal device that communicates with a network server located inside of a residence. U.S. Patent No. 5,543,778 discloses a security system including an automobile alarm system in wireless communication with a central console's microprocessor. U.S. Patent No. 5,463,595 discloses a security system having a detection zone bounded by two planes. A motion detector detects any intrusion into the protected zone, which may include an automobile. U.S. Patent No. 6,255,936 discloses a security alarm system including a personal pager device which is electronically linked with a user's residence and motor vehicles.

These previously developed systems suffer from various deficiencies and fail to develop a complete interaction scenario between a residential security system and an automobile. Furthermore, the developed systems fail to account for the various drivers and authorizations that may be permitted for the automobile as well as different monitoring states dependent on the state of the residential security system. Additionally, in these prior systems, while control of the automobile sensor can be accomplished from within the residence, the reverse scenario cannot be achieved.

Accordingly, a system is needed for fully integrating automobile protection with a residential security system that allows control of automobile protection from the home security system during each monitoring scenario of the home security system. A system is further needed that accounts for the possibility of multiple authorized drivers and multiple monitoring scenarios.

### SUMMARY OF THE INVENTION

In one aspect, a residential security system having at least one central sensing component for sensing activities within a central environment is provided. The residential security system includes central security system controls such as protective state components for determining a protective state of the security system and protective zone controls for defining a protected zone of the security system. The protective zone may be extendable beyond the central environment. The residential security system additionally includes at least one selectively recognized remote sensing component located within a mobile object remote from the central environment. The selective recognition of the remote sensing component is dependent upon the protective state and the protective zone controls.

In an additional aspect, a residential security system having multiple protective states for protecting a residence is provided. The protective states include at least an armed occupied state and an armed unoccupied state. The residential security system includes a remote sensor disposed within a remote mobile object and central security system controls for communicating with the remote sensor. The residential security system additionally includes an alarm system for generating an alarm based upon communications from the remote sensor to the central security system controls and a timing component triggering a predetermined time span upon exit of an authorized user from the residence. During the predetermined time span, the remote sensor communicates with the central security system controls without automatically activating the alarm system.

In an additional aspect, a method may be provided for protecting a remote mobile object through a residential security system. The remote mobile object may be equipped with a remote sensor in communication with the residential security system. The method includes receiving communications at security system central controls from the remote sensor upon detection by the remote sensor of intrusion into the remote mobile object. The method additionally includes selectively reacting to the communications from the remote sensor based upon a protective state of the residential security system and a protective zone of the residential security system, wherein the security system central controls generate an alert only if the remote object is in the protective zone and is in a predetermined protective state.

### BRIEF DESCRIPTION OF THE DRAWINGS

The present invention is described in detail below with reference to the attached drawings figures, wherein:
FIG. 1 is a block diagram illustrating components of a residential security system environment in accordance with an embodiment of the invention;
FIG. 2 is a block diagram illustrating components of security system central controls in accordance with an embodiment of the invention;
FIG. 3 is a block diagram illustrating components of a memory of the computing system central controls in accordance with an embodiment of the invention;
FIG. 4 is a flow chart illustrating a processing technique for protecting an automobile in accordance with an embodiment of the invention; and
FIG. 5 is a flow chart illustrating a processing technique for protecting an automobile from an unknown user in accordance with embodiments of the invention.

### DETAILED DESCRIPTION OF PREFERRED EMBODIMENTS

Embodiments of the present invention are directed to a residential security system and method for protecting a remote mobile object, such as an automobile, associated with the residential security system. The remote mobile object is generally described herein as an automobile, but may be or include any type of movable or removable remote object such as a motorized or unmotorized vehicle. The object can also be or include a boat, a piece of equipment such as an electrical or electronic object, even a piece or art such as a statue, or any other object being considered worth protecting from unauthorized removal. The remote object may be protected within a specified geographical zone and may include permissions for allowing one or more authorized drivers to access the remote object within the protected zone. The residential security system may be associated with multiple automobiles and multiple authorized users.

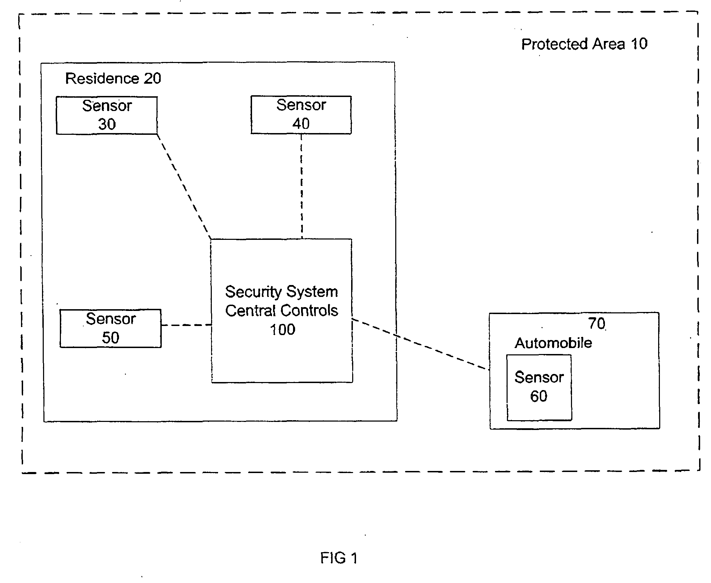

FIG. 1 is a block diagram illustrating components of a security system environment in accordance with an embodiment of the invention. The security system environment may include a protected area 10 that encompasses not only a residence 20, but also areas beyond the residence 20. As illustrated, areas beyond the residence 20 may include one or more automobiles 70. The automobile 70 may include a sensor or sensing system 60 that is communicatively coupled with the residence 20 and in particular with security system central controls 100. The security system central controls 100 may be coupled with sensors such as those shown at 30, 40, and 50 within the residence and beyond the residence.

The sensors 30, 40, 50 may include any of a variety of types of sensors including motion detectors, smoke detectors, vibration detectors or any other types of detectors useful for protection of a residence. In the residence, the sensors 30, 40, 50 may be wirelessly connected or hardwired to the system central controls 100. Likewise, the automobile sensor 60 could be a motion sensor, vibration sensor, magnetic contacts, or other type of sensor capable of sensing an intrusion into the automobile. The automobile sensor 60 may incorporate a wireless detection and communication system so that it both detects intrusion and communicatively interacts with the residential security system.

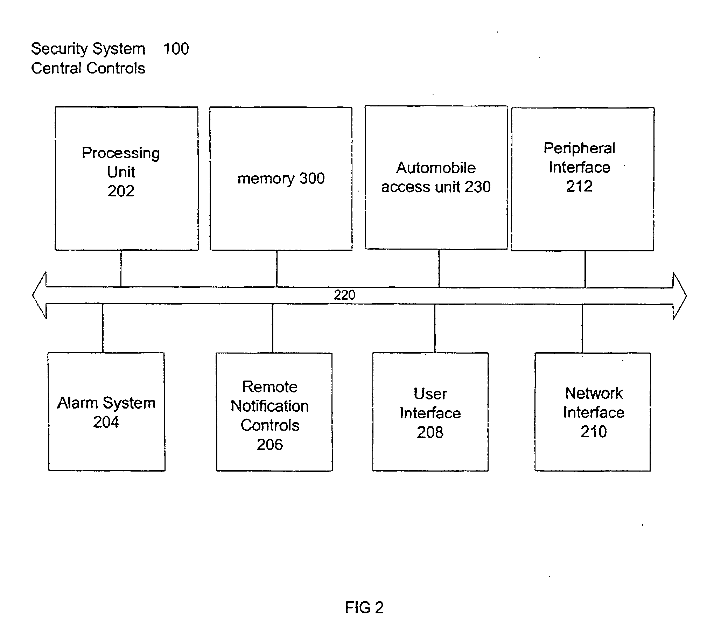

Fig. 2 illustrates an embodiment of the security system central controls 100. The security system central controls 100 may include a processing unit 202, memory 300, a peripheral interface 212, an-alarm system 204, remote notification controls 206, a user interface 208, and a network interface 210, and an automobile access unit 230. A system bus 220 may be used to couple the aforementioned components. The security system controls 100 may also include additional features.

A homeowner may enter commands and information through the user interface 208 using input devices such as a keyboard and pointing device, commonly referred to as a mouse, trackball or touch pad. The homeowner or individual responsible for maintaining settings of the residential security system is typically an adult resident, and will hereinafter be referenced as the system administrator. Other input devices may include a microphone, satellite dish, scanner, or the like. These and other input devices are often connected to the processing unit 202 through the user input interface 208 that is coupled to the system bus 220, but may be connected by other interface and bus structures, such as a parallel port or a universal serial bus (USB). A monitor or other type of display device and other peripherals may also be connected to the system bus 220 via an interface, such as the peripheral interface 212.

The remote notification controls 206 may operate so as to notify either a remote system administrator or a central monitoring center at a remote location of an intrusion. The central monitoring center may reside on any network accessible by the network interface module 210. Logical connections may be implemented to communicate with networked components. Logical connections for networking may include a local area network (LAN) or a wide area network (WAN), but may also include other networks. When used in a LAN networking environment, the system may be connected to the LAN through the network interface 210 or adapter. When used in a WAN networking environment, the security system central controls 100 typically include a modem, a network interface, or other means for establishing communications to a WAN, such as the Internet.

The remote notification controls 206 may also contact the system administrator through an appropriate network. The system administrator may thereafter be alerted by a page, a telephone call, an email, or may be equipped with an audible or vibrating device communicating directly with the central controls 100.

The alarm system 204 may include any appropriate alarm device such as an audible alarm or a visible alarm. For example, the alarm system 204 may sound a siren or other noise and may flash lights or provide another visible indicator of intrusion.

The automobile access unit 230 preferably includes communication tools such as a transceiver for communication with the remote sensor 60. The automobile access unit 230 may also notify the residential security system of the presence of the automobile in a protected zone. When an automobile is not located in a protected zone, the automobile access unit 230 may continue to monitor until it detects the sensing system 60 of the automobile within a protected zone. Monitoring may occur through regular polling of the sensing system 60 by the automobile access unit 230. The sensing of the automobile sensor 60 by the automobile access unit 230 triggers protection of the automobile by the residential security system. An authentication action may change a protective state of the security system. The authentication interaction may occur when the automobile is parked and may include any number of actions such as entering a pass code for communicating with the residential security system or swiping a token. Many other authentication actions are possible. As an example, if an automobile owner utilizing the residential security system parks his car outside his home and the access unit 230 recognizes the car, the disarming of the residential security system to allow the automobile owner's entry into the home serves as an authentication action that changes the protective state of the security system and thus triggers protection of the parked vehicle. The automobile access unit 230 may further be responsible for communication between the security system central controls 100 and the automobile sensing system 60.

The system memory 300 may include computer storage media in the form of volatile and/or nonvolatile memory such as read only memory (ROM) and random access memory (RAM). EEPROM or flash devices can also be used as storage devices. A basic input/output system (BIOS), containing the basic routines that help to transfer information between elements within the security system central controls 100, such as during start-up, is typically stored in ROM. RAM typically contains data and/or program modules that are immediately accessible to and/or presently being operated on by processing unit 202.

The memory 300 may include an operating system and program data, typically stored in RAM. Application programs stored in the memory 300 may be described in the general context of computer-executable instructions, such as program modules, being executed by a computer. Generally, program modules include routines, programs, objects, components, data structures, etc. that perform particular tasks or implement particular abstract data types. Moreover, those skilled in the art will appreciate that the invention may be practiced with other computer system configurations, including multiprocessor systems, microprocessor-based or programmable consumer electronics, minicomputers, mainframe computers, and the like.

The security system central controls 100 may also include other removable/non-removable, volatile/nonvolatile computer storage media. A hard disk drive may be provided that reads from or writes to non-removable, nonvolatile magnetic media, a magnetic disk drive that reads from or writes to a removable, nonvolatile magnetic disk, and an optical disk drive that reads from or writes to a removable, nonvolatile optical disk such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive is typically connected to the system bus 220 through a non-removable memory interface. The magnetic disk drive and optical disk drive are typically connected to the system bus by a removable memory interface.

The illustrated security system central controls 100 are merely an example of a suitable environment for the system of the invention and not intended to suggest any limitation as to the scope of use or functionality of the invention. Neither should the security system controls 100 be interpreted as having any dependency or requirement relating to any one or combination of components illustrated.

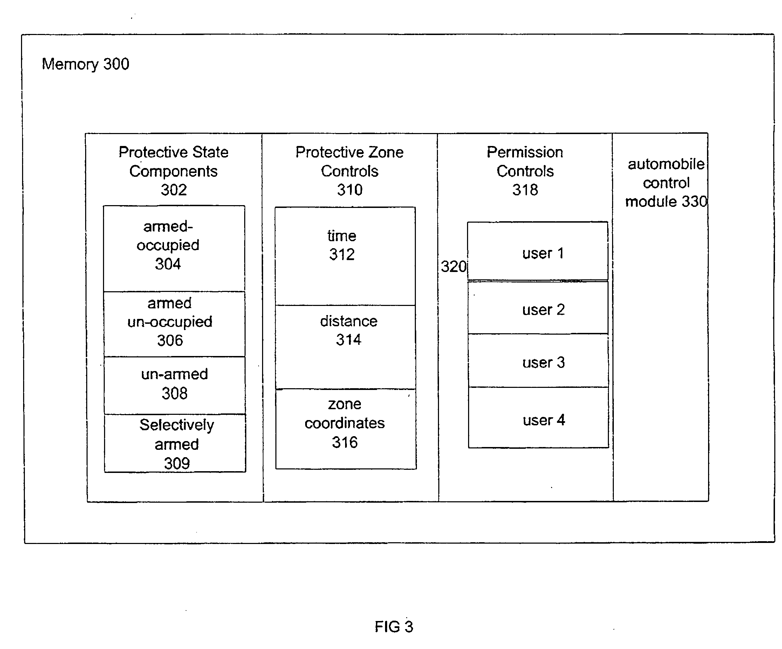

FIG. 3 is a block diagram illustrating the memory 300 in accordance with an embodiment of the invention. As set forth above, the memory 300 may store application programs described in the general context of computer-executable instructions, such as program modules, being executed by a computer. Generally, program modules include routines, programs, objects, components, data structures, etc. that perform particular tasks or implement particular abstract data types. In the displayed embodiment, the memory 300 may include protective state components 302, protective zone controls 310, permission controls 318, and an automobile control module 330.

The protective state components 302 may be activated by a home owner, head of the household, system administrator, or other authorized user through the user interface 208 as illustrated in FIG. 2. Generally speaking, the residential security system may have multiple authorized users, but will typically have only one system administrator, who is likely to be a parent or head of the household. In embodiments of the invention, the system may include an armed-occupied state component 304 for protecting a residence when it is occupied, an armed un-occupied state component 306 for protecting a residence when it is unoccupied, an un-armed state component 308 which deactivates security, and a selectively armed state component 309 that may be selectively regulated by a system administrator. These components may be set by an authorized user to trigger different types of alarms and notifications. For example, if the residence is unoccupied and armed, the component 306 may trigger remote notification both to a monitoring service and to the inhabitants of the residence. Furthermore, when using the selectively armed component 309, the system administrator may select sensors for monitoring. Each individual sensor can be configured to be monitored.

Typically, in order to switch protective states, an authorized user will perform an authentication action. For example, to switch from armed occupied to armed unoccupied, the user may enter a code on a user interface keyboard, provide a thumbprint, a voice authentication or other authentication action.

Protective zone controls 310 may include time controls 312, distance controls 314, and zone coordinate controls 316. Time controls 312 may operate to change the state of the security system at a pre-set time. Time controls 312 may also be implemented to permit a pre-determined specified time for automobile access. Distance controls 314 may be used to set a distance around the residence as protected. Zone coordinate controls 316 may be implemented to define protected zones more precisely than simply in terms of distance. For example, if an automobile is located a block north of the residence, it may be protected by the residential security system. If the automobile is located a block south of the residence, the user may opt not to protect the automobile. The zone can be adjusted at the user's option.

Permission controls 318 may include a set of authorizations 320 for different users. This set of authorizations may include multiple users such as user 1, user 2, user 3, and user 4 as shown. Each user may have different permissions with respect to entering a given zone or with respect to entering an automobile. This system facilitates parental control over a child's automobile use. Parents may authorize children to use only a particular automobile during particular hours. The system administrator may set the automobile permissions through the user interface 208 as described above. Other authorized users may perform authentication actions, but typically only the system administrator or parent will be capable of setting permissions.

A discrete automobile control module 330 may be provided. The automobile control module 330 communicates with the automobile access unit 230 described above and is capable of directing monitoring activities as dependent upon zones, permissions and states as described above. The automobile control module 330 may further direct alarm and notification activities related to the automobile. The sensing of the automobile sensor 60 by the automobile access unit 230 triggers protection of the automobile by the residential security system. Furthermore, an authentication action may change a protective state of the security system. The authentication interaction may occur when the automobile is parked and may include any number of actions such as entering a pass code for communicating with the residential security system or swiping a token. Many other authentication actions are possible. Furthermore, while the automobile control module 330 is shown as a discrete unit, its functions may be fully incorporated into other displayed program modules. For example, the automobile control module 330 may allow a system administrator to set automobile permissions. However, the automobile control module 330 may have separately programmable permission, zone, and distance controls. Alternatively, these functions may be integrated with the existing permission, zone, and distance controls described above.

Thus, through the described security system controls 100, the residential security system can be controlled and the automobile security can be controlled from the residential security system.

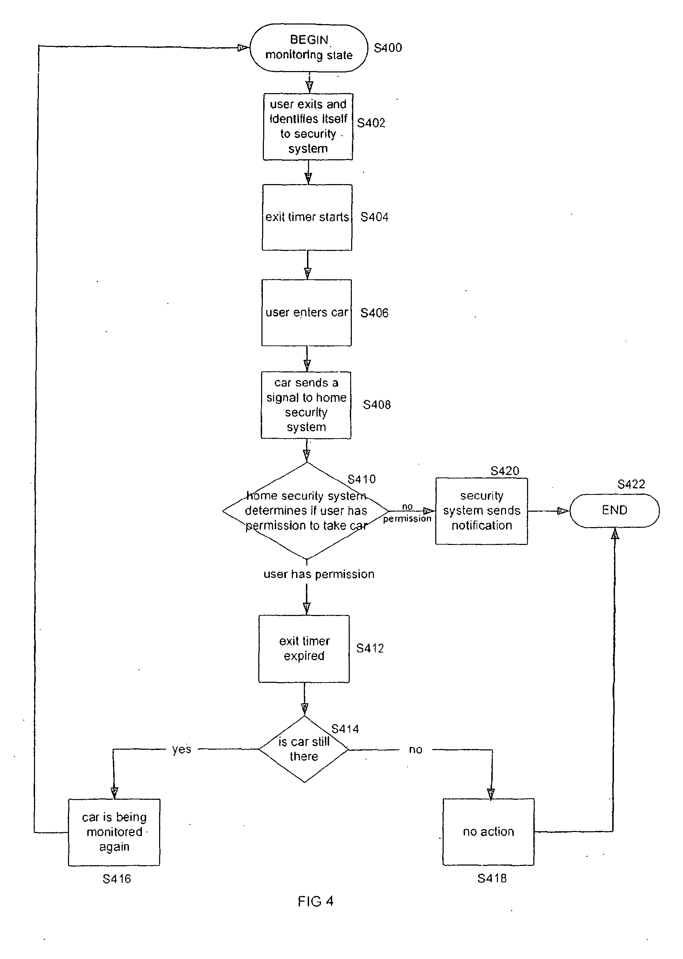

FIG. 4 is a flow chart illustrating a method for monitoring automobile access by recognized users and pertains to an armed unoccupied state of the residential security system. S400 begins the monitoring state. In S402, a user exits the residence and identifies himself or herself to the residential security system. In S404, the time component control 312 triggers an exit timer. In S406, the user attempts to enter an automobile registered with the residential security system. In S408, the automobile sensing system sends a signal to the residential security system. In S410, the residential security system through its permission controls and/or automobile access module determines whether the user has permission to take the automobile. If the user does not have permission to take the automobile, the residential security system sends an appropriate notification to the system administrator in S420. This notification may include activating an alarm on a user device, sending an email, sending a text message, or any other type of notification. This notification may typically be sent to a parent to notify the parent that a child has taken an automobile that he or she was not authorized to take.

If the user does have permission to take the automobile in S410, the time controls expire the exit timer in S412. The zone controls and/or the automobile access module 330 may determine in S414 whether the automobile has moved. If the automobile has not moved, the monitoring state of S400 repeats. If the automobile has been moved by a user having permission, no action is taken in S418 and the process ends in S422. After expiration of the timer, the residential security system will continue to poll the remote sensing component 60, but will not generate an alarm if the remote sensing component 60 fails to respond to polls.

Although Fig. 4 illustrates the process in conjunction with the timer feature, the process may be executed in any protective state to appropriately respond to entry by both authorized and unauthorized users. The above-described scenario is one exemplary scenario. However, similar protective scenarios may occur to protect the automobile regardless of the state of the residential security system. For instance, the user may disarm protection of the residence, yet continue to protect the automobile. Accordingly, a user is not required to arm the security system in order to receive authorization to enter the automobile.

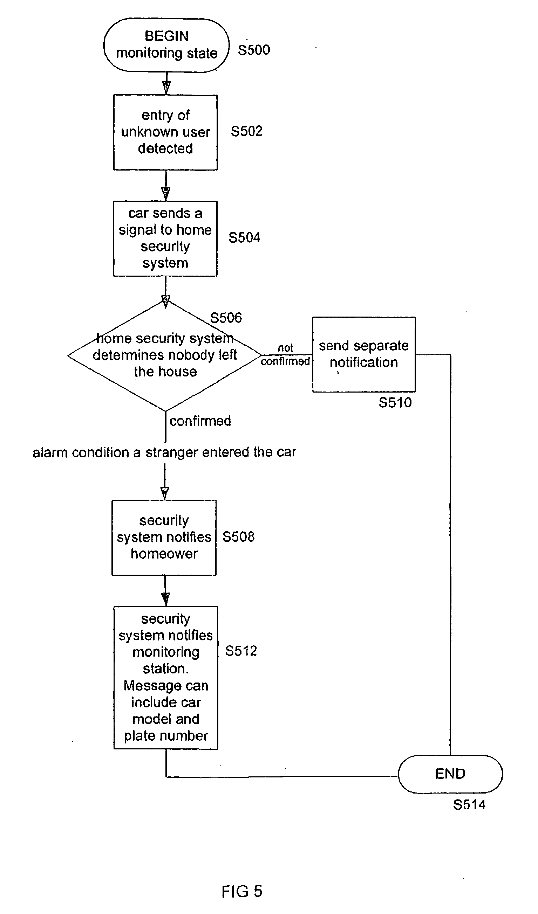

FIG. 5 is a flow chart illustrating processing upon detection of an unknown user. In S500, the system begins a monitoring state. In this scenario, the residential security system may be in any protective state that provides for protection of the remote mobile object. In S502, the automobile sensor detects an intrusion. In S504, the automobile sends a signal to the residential security system. In S506, the residential security system may execute a precautionary check to ensure that no user has recently left the premises. If the residential security system determines that no user has left the premises within a predetermined time window, an alarm condition is triggered that indicates that a stranger has entered the automobile. In S508, the residential security system notifies the user or system administrator/homeowner. In S512, the residential security system notifies the remote central monitoring system. This notification may include the model and plate number of the automobile. If in S506, if it cannot be confirmed that no one has left the house, the residential security system sends an inquiring notification to the system administrator. The process ends in S514.

Thus, when the security system is in an armed occupied state, activity within the house is not reported, but the system may create an alarm if the automobile sensor 60 does not respond to inquiries from the residential security system. Activity related to the car when the car is within a protected zone will create an alarm that will notify either a homeowner or system administrator, central security, or both parties.

When the residential security system is in an armed unoccupied state, the residential security system can monitor the automobile sensor 60 and allow use by an authorized user within a selected time period without triggering an alarm.

While particular embodiments of the invention have been illustrated and described in detail herein, it should be understood that various changes and modifications might be made to the invention without departing from the scope and intent of the invention.

From the foregoing it will be seen that this invention is one well adapted to attain all the ends and objects set forth above, together with other advantages, which are obvious and inherent to the system and method. It will be understood that certain features and sub-combinations are of utility and may be employed without reference to other features and sub-combinations. This is contemplated and within the scope of the appended claims.

## Claims

1. A residential security system having at least one central sensing component for sensing activities within a central environment; the residential security system comprising:
central security system controls comprising,
protective state components for determining a protective state of the security system, and
protective zone controls for defining a protected zone of the security system, the protective zone extendable beyond the central environment; and
at least one selectively recognized remote sensing component located within an object remote from the central environment, wherein the selective recognition is dependent upon the protective state and the protective zone controls.

2. The residential security system of claim 1, wherein the protective state controls include a setting for at least one of an armed occupied state, an armed unoccupied state, and a selectively protected state.

3. The residential security system of claim 2, wherein the protective zone controls define a protected zone outside of the home for protection of the object.

4. The residential security system of claim 3, wherein the residential security system recognizes the remote sensing component when the remote sensing component is located within the protected zone.

5. The residential security system of claim 4, further comprising permission controls for determining an object authorized user.

6. The residential security system of claim 5, wherein the permission controls are checked upon detection of intrusion into the object by the remote sensing component when the object is in the protected zone and the residence has been in the armed-unoccupied state for less than a predetermined time period.

7. The residential security system of claim 5, wherein the permission controls, upon detecting a recognized unauthorized user notify a system administrator of the intrusion.

8. The residential security system of claim 1, further comprising an alarm system for generating an alarm upon unqualified intrusion into the object as determined by the central security system controls upon receiving a signal from the remote sensing component.

9. The residential security system of claim 8, wherein unqualified intrusion occurs when the object is located in a protected zone as determined by the protective zone controls and the protective state components are in an armed occupied state.

10. The residential security system of claim 1, further comprising a remote object access unit for polling the remote sensing component.

11. The system of claim 1, wherein the remote object comprises a vehicle.

12. A residential security system having multiple protective states for protecting a residence, the protective states including at least an armed occupied state and an armed unoccupied state, the residential security system comprising:
a remote sensor disposed within a remote object;
central security system controls for communicating with the remote sensor;
an alarm system for generating an alarm based upon communications from the remote sensor to the central security system controls; and
a timing component triggering a predetermined time span upon exit of a user from the residence and entry of the residential security system into the armed unoccupied state, wherein during the predetermined time span, the remote sensor communicates with the central security system controls without automatically activating the alarm system.

13. The residential security system of claim 12, wherein the central security system controls poll the remote sensor in an armed-unoccupied state, but take no action if the remote sensor fails to respond.

14. The residential security system of claim 12, wherein the central security system controls poll the remote sensor in the armed occupied state and trigger an alarm when the remote sensor fails to respond to polls.

15. The residential security system of claim 12, further comprising protective zone controls for defining a protective zone and determining whether the remote sensor is in the protective zone.

16. The residential security system of claim 12, further comprising protective state components for defining and determining the protective state of the security system.

17. The residential security system of claim 15, wherein the residential security system recognizes the remote sensing component when the remote sensing component is located within the protective zone.

18. The residential security system of claim 16, further comprising permission controls for determining an authorized user.

19. The residential security system of claim 18, wherein the permission controls are checked upon detection of intrusion into the object by the remote sensing component when the object is in the protective zone and the residence has been in the armed-unoccupied state for less than the predetermined time span.

20. The residential security system of claim 19, wherein the permission controls, upon detecting a recognized unauthorized user notify a system administrator of the intrusion.

21. The residential security system of claim 20, wherein upon unqualified intrusion, when the object is located in a protected zone in an armed occupied state, the alarm system generates an alarm.

22. The residential security system of claim 12, further comprising an access unit for polling the remote sensing component at selected intervals.

23. The residential security system of claim 12, wherein the remote object comprises an automobile.

24. A method for protecting a remote object through a residential security system, the residential security system having security system central controls, and the remote object equipped with a remote sensor in communication with the residential security system, the method comprising:
receiving communications at the security system central controls from the remote sensor upon detection by the remote sensor of intrusion into the remote object; and
selectively reacting to the communications from the remote sensor based upon a protective state of the residential security system and a protective zone of the residential security system, wherein the security system central controls generate an alert only if the remote object is in the protective zone and is in a predetermined protective state.

25. The method of claim 24, further comprising polling the remote sensor from an access unit located within the security system central controls.

26. The method of claim 24, further comprising determining with permission controls of the security system central controls whether a user detected by the remote sensor is an authorized user of the remote object.

27. The method of claim 24, further comprising determining an armed occupied state and an armed unoccupied state based on user authentication.

28. The method of claim 27, further comprising checking the permission controls upon detection of intrusion into the remote object by the remote sensor when the remote object is in the protective zone and the residence has been in the armed-unoccupied state for less than a predetermined time period.

29. The method of claim 28, further comprising notifying the system administrator of the intrusion upon detecting a recognized unauthorized user.

30. The method of claim 24, further comprising generating an alarm upon unqualified intrusion into the remote object as determined by the central security system controls upon receiving a signal from the remote sensing component.

31. The method of claim 30, further comprising detecting unqualified intrusion when the remote object is located in a protective zone as determined by the protective zone controls and the protective state components are in an armed occupied state.

32. A computer readable medium comprising computer executable instructions for performing the method of claim 24.
